# EUROPEAN PATENT APPLICATION

(11) **EP 4 307 496 A1**
(43) Date of publication of application: **17.01.2024**
(21) Application number: 21929832.0
(22) Date of filing: 19.08.2021
(51) Int. Cl.: H01S 3/02, H01S 3/23, G01C 15/00

(54) **LINE LASER MODULE AND SELF-MOVING DEVICE**

(30) Priority: 08.03.2021 CN 202110252310
(71) Applicant: Beijing Roborock Technology Co., Ltd., Beijing 102206 (CN)
(72) Inventor: YU, Guang, Beijing 102206 (CN); LONG, Yongji, Beijing 102206 (CN); WANG, Mingchuan, Beijing 102206 (CN); WANG, Zheng, Beijing 102206 (CN)
(74) Representative: Petraz, Gilberto Luigi
(86) International application number: PCT/CN2021/113646
(87) International publication number: WO 2022/188366

(57) **Abstract**

Disclosed are a line laser module and a self-moving device. The line laser module is applied to the self-moving device, and comprises: a photographing apparatus used for acquiring an environment image; line laser emitters arranged on the two sides of the photographing apparatus, and used for emitting laser having a linear projection, the photographing apparatus working in conjunction with the line laser emitters; and a pile returning positioning apparatus used for receiving an infrared signal emitted by a charging pile. In this case, a sensing component in communication connection with the charging pile and a sensing component for measuring a road condition in front of a device body are integrated into the line laser module, such that the modular design of a sensing system is realized, and both assembly and maintenance are convenient.

## Description

### CROSS-REFERENCE TO RELATED APPLICATION

This application claims priority to the Chinese Patent Application No. 202110252310.2 filed on March 8, 2021, the disclosure of which is incorporated herein by reference in its entirety.

### TECHNICAL FIELD

The present disclosure relates to the field of cleaning devices, and in particular to a linear laser module and a self-moving device.

### BACKGROUND ART

With the development of technology, a variety of robots with intelligent systems emerge, such as floor-cleaning robots, floor-mopping robots, dust collectors, weeding machines. These robots can automatically move through an area and perform a cleaning or clearing operation without being operated by a user. The robots usually avoid obstacles by means of distance measurement, and are communicatively connected to charging piles and docked with charging piles in position through sensing components.

### SUMMARY

A series of concepts in simplified form are introduced in the section of Summary, and will be further described in detail in the section of Detailed Description. This part of the present disclosure is not intended to attempt to define key features and necessary technical features of the technical solutions claimed, nor is it intended to attempt to determine the scope of protection of the technical solutions claimed.

According to embodiments of a first aspect of the present disclosure, a linear laser module is provided. The linear laser module includes: a camera apparatus, for acquiring an ambient image; at least one linear laser emitter, disposed on both sides of the camera apparatus and configured to emit a laser having a linear projection, the camera apparatus working in coordination with the at least one linear laser emitter; and a return-to-pile positioning apparatus, for receiving a first infrared signal emitted by a charging pile.

Optionally, the linear laser module further includes: an optical filter, disposed in front of the camera apparatus and configured to only allow infrared light to enter the camera apparatus, where the return-to-pile positioning apparatus further includes an infrared emission apparatus for emitting a second infrared signal.

Optionally, the linear laser module further includes: a fixed seat, on which the camera apparatus, the at least one linear laser emitter, and the return-to-pile positioning apparatus are disposed.

Optionally, the at least one linear laser emitter is movably connected to the fixed seat, and/or the fixed seat has a movable structure, such that an azimuth angle and a rotation angle of the at least one linear laser emitter are adjustable.

Optionally, the fixed seat includes a body and a connection member, the camera apparatus is disposed on the body, the at least one linear laser emitter is disposed in the connection member in a penetrating way, the at least one linear laser emitter is rotatably connected to the connection member such that the rotation angle of the at least one linear laser emitter is adjustable, and the connection member is movably connected to the body such that the azimuth angle of the at least one linear laser emitter is adjustable.

Optionally, the body is provided with a positioning slot, the connection member is provided with a convex structure adapted to the positioning slot, and the convex structure is configured to rotate horizontally within the positioning slot for driving the at least one linear laser emitter to rotate relative to the body.

Optionally, the fixed seat includes a body, at least one end portion, and at least one connection portion. The at least one end portion is located on at least one side of the body and connected to the body by the at least one connection portion. The camera apparatus is disposed on the body, and the at least one linear laser emitter is disposed at the at least one end portion. The at least one connection portion is pivotally connected to the body such that the azimuth angle of the at least one linear laser emitter is adjustable. The at least one end portion is rotatably connected to the at least one connection portion such that the rotation angle of the at least one linear laser emitter is adjustable.

Optionally, the fixed seat includes a body, end portions, and position-limiting portions, The end portions are located on both sides of the body, the camera apparatus is disposed on the body, and the at least one linear laser emitter is disposed at the end portions. The end portions are rotatably connected to the body such that the rotation angle and the azimuth angle of the at least one linear laser emitter are adjustable. The position-limiting portions are disposed between the end portions and the body, and are configured to limit the rotations of the end portions relative to the body.

Optionally, the fixed seat includes a body and end portions located on both sides of the body. The camera apparatus is disposed on the body, and the at least one linear laser emitter is movably disposed at the end portions. The end portions are pivotally connected to the body such that the azimuth angle of the at least one linear laser emitter is adjustable. The at least one linear laser emitter is rotatably connected to the end portions such that the rotation angle of the at least one linear laser emitter is adjustable.

Optionally, the fixed seat is provided with an installation cavity, and the at least one linear laser emitter is movably disposed in the installation cavity. The installation cavity includes a first end and a second end, a cross-sectional area of the first end is less than that of the second end, and the cross-sectional area of the first end is greater than that of the at least one linear laser emitter. The front end of the at least one linear laser emitter is close to the first end, and the at least one linear laser emitter is configured to rotate relative to the installation cavity, such that the rotation angle of the at least one linear laser emitter is adjustable. The rear end of the at least one linear laser emitter is able to swing relative to the front end, such that the azimuth angle of the at least one linear laser emitter is adjustable.

Optionally, the at least one linear laser emitter is cylindrical, and provided with a first step structure on an outer peripheral side thereof. The fixed seat is provided with an installation slot for installing the at least one linear laser emitter, and an inner wall of the installation slot is provided with a second step structure. The first step structure and the second step structure are adapted to each other, and are configured for limiting the movement of the at least one linear laser emitter in an axial direction.

According to embodiments of a second aspect of the present disclosure, a self-moving device is provided. The self-moving device includes: a device body; a controller; and the linear laser module described in any one of the embodiments of the first aspect. The linear laser module is disposed on the device body, and the controller is electrically connected to the camera apparatus and the at least one linear laser emitter, and is configured to control functions of the self-moving device according to the ambient image captured by the camera apparatus.

Optionally, the self-moving device further includes: a charging pile, adapted to be connected to or disconnected from the device body, where the charging pile includes an infrared emission apparatus for emitting the first infrared signal. The controller is connected to the return-to-pile positioning apparatus of the linear laser module, and is configured to guide, according to the first infrared signal received by the return-to-pile positioning apparatus, the device body to be docked with the charging pile, and to emit a second infrared signal to the charging pile when the device body is successfully docked with the charging pile.

Optionally, the self-moving device further includes: a buffer component, disposed on a front side of the device body. The linear laser module is located between the buffer component and the device body. The buffer component is provided with windows at positions facing the camera apparatus, the at least one linear laser emitter, and the return-to-pile positioning apparatus of the linear laser module.

Optionally, the self-moving device further includes: a fill-in light, disposed on the buffer component, where the controller is connected to the fill-in light for controlling the fill-in light to turn on or turn off.

Optionally, the self-moving device further includes: a device control module, electrically connected to the camera apparatus, and configured for controlling the movement of the self-moving device according to obstacle position information and obstacle type information in the ambient image captured by the camera apparatus.

Optionally, the self-moving device further includes: a master control unit, electrically connected to the camera apparatus and the device control module, and configured for processing the ambient image captured by the camera apparatus to obtain the obstacle position information and the obstacle type information. The device control module is configured to receive the obstacle position information and the obstacle type information from the master control unit.

Optionally, the self-moving device further includes: a memory, electrically connected to the master control unit and the device control module, and configured for receiving and storing the obstacle position information and the obstacle type information from the master control unit. The device control module is configured to receive the obstacle position information and the obstacle type information from the memory.

Optionally, in the self-moving device, the device control module and the master control unit are independent of each other or integrated together.

Optionally, the self-moving device further includes: an alert apparatus, connected to the device control module, and configured for issuing an alarm in the form of at least one of sound and light under the control of the device control module.

In the linear laser module and the self-moving device according to embodiments of the present disclosure, the linear laser module includes the return-to-pile positioning apparatus, the camera apparatus, and the at least one linear laser emitter. That is, a sensing component communicatively connected to the charging pile and a sensing component for measuring a road condition in front of the device body are integrated into the linear laser module, thereby allowing a modular design of a sensing system, which is convenient for assembly and repair.

### BRIEF DESCRIPTION OF THE DRAWINGS

The following drawings in the present disclosure are used herein as part of embodiments of the present disclosure for the purpose of understanding the present disclosure. The embodiments of the present disclosure and descriptions thereof are shown in the accompanying drawings to explain the principle of the present disclosure.

In the drawings:
FIG. 1 is a partially schematic structural diagram of a linear laser module according to an optional embodiment of the present disclosure;
FIG. 2 is a schematic structural diagram of a linear laser module according to another optional embodiment of the present disclosure;
FIG. 3 is a partially schematic structural diagram of a protective plate according to an optional embodiment of the present disclosure;
FIG. 4 is a schematic diagram of an operation principle of a linear laser emitter according to an optional embodiment of the present disclosure;
FIG. 5 is a schematic diagram of a relationship between a linear laser emitter and a field-of-view angle of a camera apparatus according to an optional embodiment of the present disclosure;
FIG. 6 is a partially schematic structural diagram of a fixed seat according to an optional embodiment of the present disclosure;
FIG. 7 is a partially schematic structural diagram of a fixed seat according to another optional embodiment of the present disclosure; and
FIG. 8 is a diagram of time points for time-division control according to an embodiment of the present disclosure.

### Description of reference numerals

110. linear laser emitter 111. first step structure
120. camera apparatus 140. fixed seat
141. body 142. end portion
143. connection member 144. positioning slot
145. convex structure 146. connection portion
147. position-limiting portion 148. position-limiting hole
149. second step structure 150. infrared emission apparatus
160. infrared reception apparatus 170. buffer component
171. window 180. fill-in light
190. return-to-pile positioning apparatus 200. device body.

### DETAILED DESCRIPTION

In the description below, a number of specific details are given in order to provide a more thorough understanding of the technical solutions of the present disclosure. However, it is apparent to those skilled in the art that the technical solutions of the present disclosure may be implemented without one or more of these details.

It should be noted that terms used herein are only for the purpose of describing specific embodiments, and are not intended to limit exemplary embodiments of the present disclosure. As used herein, unless it is clearly indicated otherwise in the context, singular forms are intended to include plural forms as well. Furthermore, it should also be understood that the term "include" and/or "comprise", when used in the description, indicates the existence of stated features, integers, steps, operations, elements, and/or assemblies, but does not exclude the existence or addition of one or more other features, integers, steps, operations, elements, assemblies, and/or combinations thereof.

The exemplary embodiments of the present disclosure will now be described in more detail with reference to the accompanying drawings. However, these exemplary embodiments may be implemented in many different forms, and should not be interpreted as being only limited to the embodiments described herein. It should be understood that these embodiments are provided to make contents disclosed in the present disclosure exhaustive and complete, and to fully deliver the conception of these exemplary embodiments to those of ordinary skills in the art.

According to an optional embodiment of the present disclosure, a linear laser module is provided. According to a further optional embodiment of the present disclosure, a self-moving device is provided. The linear laser module is applied to the self-moving device. In particular, the self-moving device is an intelligent cleaning device, such as a floor-cleaning robot, a floor-mopping robot, a floor-polishing robot, or a weeding robot. For the convenience of description, the technical solutions of the present disclosure are described in the embodiments by taking the floor-cleaning robot as an example.

In an optional embodiment of the present disclosure, the self-moving device may include a device body 200, a sensing system, a control system, a driving system, a cleaning system, an energy system, and a human-computer interaction system, etc. These systems coordinate and cooperate with each other to enable a cleaning device to move autonomously for a cleaning function. Functional elements and the like that constitute the various systems described above in the cleaning device are integrated within the device body 200.

The device body 200 has a roughly circular shape (both the front and the rear thereof are circular), and may also have other shapes, including but not limited to a roughly D-shaped form, in which case the front thereof is square and the rear thereof is circular. The sensing system includes a linear laser module located above or laterally on the device body 200. A controller of the control system is connected to the linear laser module, and controls the function of the self-moving device according to a sensing result of the linear laser module.

In embodiments of the present disclosure, the linear laser module is not limited to a specific position on the device body 200. For example, the specific position may be, but is not limited to, a front side, a rear side, a left side, a right side, the top, the middle, the bottom, and other positions of the device body 200. Further, the linear laser module is disposed at a middle position, a top position, or a bottom position in a height direction of the device body 200.

In some possible embodiments of the present disclosure, the self-moving device moves forward to execute an operation task. In order to better detect ambient information ahead, the linear laser module is disposed on the front side of the device body 200. The front side refers to the side to which the device body 200 is oriented during the forward movement of the self-moving device.

Further, the self-moving device further includes a charging pile, which is adapted to be connected to or disconnected from the device body 200. For example, when the device body 200 needs to be charged, it is docked with the charging pile for charging. When the device body 200 is used for cleaning, it is disconnected from the charging pile for a cleaning operation. The charging pile includes an infrared emission apparatus for emitting an infrared signal. It can be understood that when the device body 200 needs to return to the pile for charging, the device body 200 needs to match with the charging pile in position and to communicatively connect with the charging pile.

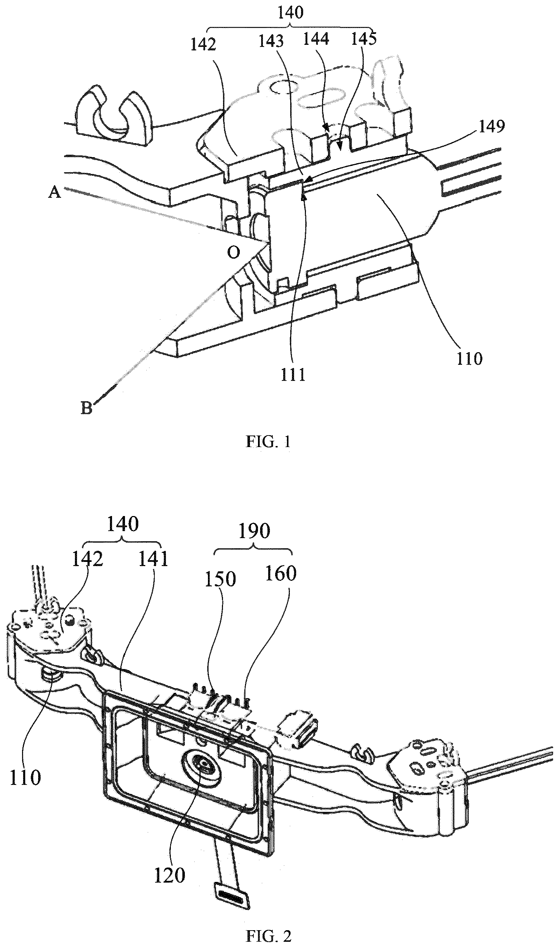

As shown in FIG. 1 and FIG. 2, the linear laser module includes: a camera apparatus 120, for acquiring an ambient image; at least one linear laser emitter 110, disposed on at least one side of the camera apparatus 120 and configured to emit a laser having a linear projection, the camera apparatus 120 working in coordination with the linear laser emitter 110; and a return-to-pile positioning apparatus 190, for receiving an infrared signal emitted by a charging pile.

In the linear laser module according to embodiments of the present disclosure, the camera apparatus 120 and the linear laser emitter 110 coordinate with each other, such that a road condition in front of the device body 200 can be sensed. For example, an obstacle or a terrain in front of the device body 200 may be recognized for the purpose of performing a corresponding obstacle avoidance operation or a cleaning operation. The linear laser module further includes the return-to-pile positioning apparatus 190. When the linear laser module is installed on the device body 200 and the device body 200 is returning to the pile for charging, the controller controls the return-to-pile positioning apparatus 190 to search for the infrared signal near the charging pile. When the return-to-pile positioning apparatus 190 receives the infrared signal, the device body 200 is guided, according to the infrared signal, to be docked with the charging pile for charging. That is, the return-to-pile positioning apparatus 190 implements a communicative connection with the charging pile and matches with the charging pile in position. An infrared emission apparatus 150 implements a communicative connection with the charging pile. That is to say, the linear laser module in an embodiment includes the return-to-pile positioning apparatus 190, the camera apparatus 120, and the linear laser emitter 110. This in turn renders, a sensing component communicatively connected to the charging pile and matched with the charging pile in position, and a sensing component for measuring the road condition in front of the device body 200, to be integrated into the linear laser module, thereby allowing a modular design of the sensing system, which is convenient for assembly and repair.

Further, the return-to-pile positioning apparatus 190 further includes an infrared emission apparatus 150 for emitting an infrared signal. When the device body 200 is successfully docked with the charging pile, the controller controls the infrared emission apparatus 150 to emit the infrared signal to the charging pile, for the purpose of charging the device body 200. That is to say, the return-to-pile positioning apparatus 190 includes an infrared reception apparatus 160 and the infrared emission apparatus 150. The infrared reception apparatus 160 is configured to receive the infrared signal, and the infrared emission apparatus 150 is configured to emit the infrared signal. In an embodiment, the infrared reception apparatus 160 and the infrared emission apparatus 150, as well as the camera apparatus 120, the camera apparatus 120, and the linear laser emitter 110 are all disposed on a fixed seat 140, thereby allowing the modular design of the sensing system, which is convenient for assembly and repair.

Further, the linear laser module is detachably connected to the device body 200. When the infrared emission apparatus 150 or the infrared reception apparatus 160 malfunctions, the linear laser module is removed from the device body for the purpose of repairing the infrared emission apparatus 150 or the infrared reception apparatus 160, and debugging it with the charging pile. The infrared emission apparatus 150 and the infrared reception apparatus 160 are components of the linear laser module. That is, the infrared emission apparatus 150 and the infrared reception apparatus 160 are disposed on the linear laser module, and the linear laser module is smaller in size and lighter in weight compared with the device body 200. Thus, it is convenient for an operator to convey and move the linear laser module during the maintenance and debugging process of the infrared emission apparatus 150 and the infrared reception apparatus 160.

In particular, the linear laser module further includes the fixed seat 140, and the camera apparatus 120, the linear laser emitter 110, and the return-to-pile positioning apparatus 190 are all disposed on the fixed seat 140, thus allowing a modular design of the linear laser module. It can be understood that the fixed seat 140 is connected to the device body 200, such that the linear laser module is assembled onto the device body.

Further, the infrared reception apparatus 160 of the return-to-pile positioning apparatus 190 includes an infrared lamp. There are at least two infrared reception apparatuses 160. For example, there may be two, three, four, or other quantity of infrared reception apparatuses 160 that meet requirements. The infrared emission apparatus 150 of the return-to-pile positioning apparatus 190 includes an infrared lamp. There may be one, two, three, or other quantity of infrared emission apparatuses 150 that meet requirements. In particular, the infrared reception apparatus 160 and the infrared emission apparatus 150 of the return-to-pile positioning apparatus 190 are both infrared lamps, and a plurality of infrared lamps are distributed on the top of the fixed seat 140 at intervals in a length direction of the fixed seat 140. Such an arrangement is conducive to ensuring the reliability for the infrared reception apparatus 160 to receive a near-field infrared signal, and ensuring the reliability for the device body 200 to be communicatively connected with the charging pile. It can be understood that the infrared reception apparatus 160 and the infrared emission apparatus 150 may also be disposed at other positions that meet requirements, which is not specifically limited in the present disclosure.

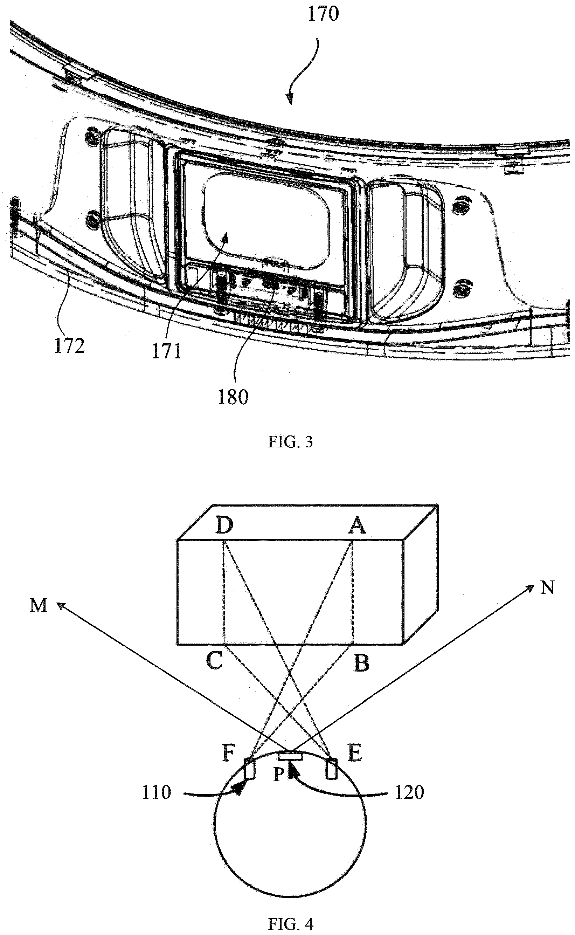

Further, the linear laser emitter 110 is configured to emit a laser having a linear projection. For example, the linear laser emitter 110 emits a laser plane outward, the laser plane may form a linear laser on a surface of an obstacle after reaching the obstacle, and an ambient image is detected by means of the linear laser. A plane AOB shown in FIG. 1 characterizes a plane, which is perpendicular to the linear laser, of the linear laser emitter 110. A plane ABF and a plane CDE shown in FIG. 4 characterize the laser plane of the linear laser emitter 110. A line segment AB and a line segment CD in FIG. 4 characterize the linear lasers. In particular, the linear laser emitter 110 may be a laser tube. It can be understood that the linear laser emitter 110 may also have other structures that meet requirements, which is not specifically limited in the present disclosure. It can be understood that a wavy lens may also be disposed in an emission direction of (for example, in front of) the linear laser emitter 110. In particular, the wavy lens is a concave lens. For example, the concave lens is disposed in front of the laser tube, and the laser tube emits light of a particular wavelength (for example, infrared light), which becomes divergent light rays after passing through the concave lens, thereby forming a straight line on a plane perpendicular to a light path.

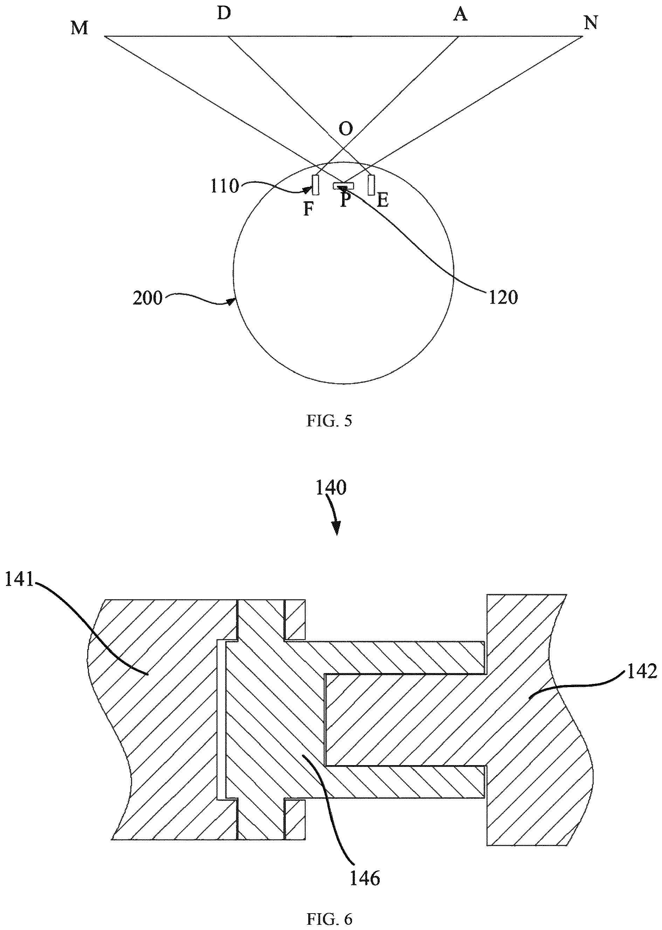

As shown in FIG. 4 and FIG. 5, the linear laser emitter 110 is distributed on at least one side of the camera apparatus 120, and the camera apparatus 120 works in coordination with the linear laser emitter 110. That is, a first ambient image acquired by the camera apparatus 120 is formed by the linear laser that is emitted by the linear laser emitter 110 and then reflected by the obstacle. According to the first ambient image, a distance between the obstacle and the device body 200 or the linear laser module can be measured, thereby allowing the corresponding obstacle avoidance operation. It can be understood that there may be a pair of linear laser emitters 110, and the pair of linear laser emitters 110 are distributed on both sides of the camera apparatus 120.

In an embodiment, in order to enable the camera apparatus 120 to timely and accurately acquire the ambient images detected by the linear lasers, it is necessary to allow the linear lasers to be located within a field-of-view angle of the camera apparatus 120. As shown in FIG. 4, it is a schematic diagram of an operation principle of the linear laser emitters 110. A letter P represents the camera apparatus 120, letters E and F represent the linear laser emitters 110 located on both sides of the camera apparatus 120, and straight lines PM and PN represent two boundaries of a horizontal field of view of the camera apparatus 120. That is, LMPN represents a horizontal field-of-view angle of the camera apparatus 120. The linear laser emitters 110 emit a laser plane FAB and a laser plane ECD outward, and the laser planes may form the linear lasers, i.e., the line segments AB and CD shown in FIG. 4, on the surface of the obstacle after reaching the obstacle. Since the line segments AB and CD of the linear lasers emitted by the linear laser emitters 110 are located within the field of view of the camera apparatus 120, the linear lasers may assist in detecting information, such as a profile, a height and/or a width, about an object within the field-of-view angle of the camera apparatus 120, and the camera apparatus 120 may acquire the ambient images detected by the linear lasers.

Further, the controller may calculate the distance from the linear laser module or the device body 200 where the linear laser module is located to the obstacle ahead according to the first ambient image acquired by the camera apparatus 120. In particular, a triangulation ranging method may be used to calculate the distance from the linear laser module or the device body 200 to the obstacle ahead. In particular, as shown in FIG. 5, it is a schematic diagram of one view angle of the embodiment shown in FIG. 4. The letter P represents the camera apparatus 120, and the letters E and F represent the linear laser emitters 110 located on both sides of the camera apparatus 120. The point A represents a projection of the line segment AB on a horizontal plane, and the point D represents a projection of the line segment CD on the horizontal plane. LMPN represents the horizontal field-of-view angle of the camera apparatus 120; and the point O represents an intersection point between the linear lasers emitted by the linear laser emitters 110 and an optical axis of the camera apparatus 120. Taking the linear laser emitter F as an example, after the linear laser emitter 110 and the camera apparatus 120 are both fixedly installed onto the fixed seat 140, a focal length of the camera apparatus 120 is known, and an emission angle of the linear laser emitter F is known. That is, an included angle between a straight line FA and an optical axis PO is known, and the length of a line segment OP is known. Also, a vertical distance between centers of the linear laser emitter F and the camera apparatus 120 in the horizontal plane is known, and an image of the point A on the obstacle in the ambient image acquired by the camera apparatus 120 is defined as A'. Since the point A' is somewhat offset with respect to the optical axis PO of the camera apparatus 120, and the amount of the offset is known, a distance between A and F may be measured according to a triangle similarity principle and in combination with the above known conditions. That is, the distance between the obstacle and the linear laser emitter 110 may be obtained. It can be understood that a terrain condition ahead may also be determined according to a deformation feature of the line segments, which are acquired by the camera apparatus 120, of the linear lasers reflected by the obstacle, thereby determining a specific functional operation, for example, performing the obstacle avoidance operation or continuing the cleaning operation.

In some possible embodiments of the present disclosure, the number of the camera apparatuses 120 is not specifically limited. For example, there may be one, two, three, or other quantity of camera apparatuses 120 that meet requirements. In particular, the camera apparatus 120 may be a monocular camera or a binocular camera. It can be understood that in an embodiment, the total number of the linear laser emitters 110 is not specifically limited as well. For example, there may be two or more linear laser emitters 110. The number of the linear laser emitters 110 distributed on each side of the camera apparatus 120 is also not limited. There may be one, two, or more linear laser emitters 110 on each side of the camera apparatus 120. In addition, the number of the linear laser emitters 110 on either side of the camera apparatus 120 may be the same or different. It can be understood that when there are a plurality of linear laser emitters 110 on either side of the camera apparatus 120, the plurality of linear laser emitters 110 may be uniformly or non-uniformly distributed, which is not specifically limited in the present disclosure.

Further, in some possible embodiments, the camera apparatus 120 may not only allow the measurement of the distance from the obstacle in front of the device body 200, but also recognize the type of the obstacle. For example, based on difference in timing, the camera apparatus 120 is used to measure the distance from the obstacle and recognize the type of the obstacle respectively. By way of example, the controller first determines the type of the obstacle according to part of the ambient images acquired by the camera apparatus 120, and determines, according to the type of the obstacle, whether the device body 200 needs to perform the obstacle avoidance operation or not. When the device body 200 needs to perform the obstacle avoidance operation, the controller determines the distance from the obstacle according to another part of the ambient images acquired by the camera apparatus 120, for the purpose of performing the corresponding obstacle avoidance operation. When the device body 200 does not need to perform the obstacle avoidance operation, the cleaning operation is performed directly, thereby reducing the possibility for the self-moving device to have a false obstacle avoidance operation.

In some embodiments of the present disclosure, the linear laser emission apparatus 110 may include a linear laser emitter and a laser drive circuit. The laser drive circuit may receive a drive signal, and drive, according to the drive signal, the linear laser emitter to emit a linear laser.

Further, the laser drive circuit may include amplification circuits, through which the drive signal may be amplified, and the amplified drive signal may be transmitted to the linear laser emitter to allow the linear laser emitter to emit light. In some embodiments of the present disclosure, the drive signal may include a control signal and a regulation signal. The linear laser emitter may be controlled to turn on or turn off via the control signal, and emission power of the linear laser emitter may be regulated via the regulation signal. In particular, the amplification circuits may include a first amplification circuit and a second amplification circuit.

The first amplification circuit is configured to receive the control signal transmitted by a master control unit, amplify the control signal, and then transmit the amplified control signal to the linear laser emitter for controlling the linear laser emitter to turn on or turn off.

The second amplification circuit is configured to receive the regulation signal transmitted by the master control unit, amplify the regulation signal, and then transmit the amplified regulation signal to the linear laser emitter for controlling the emission power of the linear laser emitter.

Specific structures of the first amplification circuit and the second amplification circuit are not specially limited herein, as long as the function of signal amplification can be achieved.

In some possible embodiments of the present disclosure, the linear laser module includes a body portion and a first ambient image acquisition assembly. The first ambient image acquisition assembly includes a camera apparatus, at least one pair of linear laser emission apparatuses, and a first ambient image processing module that are disposed on the body portion. The pair of linear laser emission apparatuses are located on both sides of the camera apparatus, and configured to emit a linear laser having a linear projection. The camera apparatus works in coordination with the linear laser emission apparatuses, and is configured to acquire a first ambient image. The first ambient image processing module may obtain obstacle position information according to the first ambient image.

In an embodiment, in a case that the linear laser is turned on, the first ambient image acquired by the camera apparatus is used to measure the distance from the obstacle; and in a case that the linear laser is turned off and a fill-in light is turned on, a second ambient image acquired by the camera apparatus is used to recognize the type of the obstacle. Therefore, the type of the obstacle may be determined according to the second ambient image captured by the camera apparatus 120; and whether the device body 200 needs to perform the obstacle avoidance operation or not may be determined according to the type of the obstacle. When the device body 200 needs to perform the obstacle avoidance operation, the camera apparatus 120 and the linear laser emitter 110 coordinate with each other to determine the distance from the obstacle, for the purpose of performing the corresponding obstacle avoidance operation. When the device body 200 does not need to perform the obstacle avoidance operation, the cleaning operation is performed directly, thereby reducing the possibility for the self-moving device to have the false obstacle avoidance operation.

In particular, there are a plurality of second ambient images, for example, 500, 1000, or other quantity of second ambient images that meet requirements. For example, the number of the second ambient images may be determined by adjusting the exposure frequency of the camera apparatus 120. The control system performs image segmentation on a plurality of second ambient images taken by the camera apparatus 120. Then, the segmented images are input into a trained obstacle model; feature extraction is then performed on the segmented images; confidence matching is performed between the extracted feature information and the trained obstacle model; and the type of the obstacle is determined according to a confidence matching result.

That is to say, in the linear laser module according to embodiments of the present disclosure, the type of the obstacle may be determined by means of the second ambient images acquired by the camera apparatus 120, thereby enabling the self-moving device to determine, according to the type of obstacle, to perform the obstacle avoidance operation or to perform the cleaning operation according to an original cleaning path. When the obstacle avoidance operation needs to be performed, the controller controls the camera apparatus 120 and the linear laser emitter 110 to work in coordination, and determines the distance between the obstacle and the linear laser module or the device body 200 according to the first ambient image acquired by the camera apparatus 120, thereby performing the corresponding obstacle avoidance operation.

For example, the obstacle is determined to be a balloon according to the second ambient image captured by the camera apparatus 120. The balloon, due to its light weight, may be driven to move as the driving system drives the device body 200 to move. That is, the balloon does not affect a cleaning path. Therefore, the controller controls the device body 200 to perform the cleaning operation according to the original cleaning path, without performing any obstacle avoidance operation, such that the position where the balloon is located can be cleaned, thereby advantageously expanding the cleaning range.

For another example, the obstacle is determined to be a chair according to the second ambient image captured by the camera apparatus 120. Due to the large weight of the chair, if cleaning is performed according to the original cleaning path, the device body 200 may collide with the chair, possibly resulting in damages. That is, the chair affects the cleaning path. Therefore, the controller controls the device body 200 to perform the obstacle avoidance operation so as to change the cleaning path. That is, the controller controls the linear laser emitter 110 to work and emit the linear laser, the camera apparatus 120 captures a first ambient image of light rays reflected from the chair, and the controller determines the distance between the linear laser module or the device body 200 and the chair according to the first ambient image. Then, the controller re-plans the cleaning path according to the distance for performing the obstacle avoidance operation, thereby improving the effect of obstacle avoidance.

In some possible embodiments of the present disclosure, the camera apparatus 120 is a monochromatic camera, and an infrared lens is disposed in front of the monochromatic camera and only allows infrared light to pass therethrough. It can be understood that the linear laser emitter 110 working in coordination with the camera apparatus 120 is an infrared laser tube that emits an infrared laser.

In some embodiments of the present disclosure, a second ambient image processing module is also included. The second ambient image processing module may include a feature extraction module and a recognition module.

The feature extraction module is configured to perform feature extraction on the second ambient image to obtain feature information.

By way of example, grayscale information and position information about pixels, which pixels meet certain conditions, in the second ambient image may be used as the feature information. In particular, the second ambient image may be pre-processed by the feature extraction module. For example, the second ambient image is binarized, etc. The grayscale information and the position information about respective pixels in the pre-processed second ambient image are then acquired. A preset grayscale range is then compared with the grayscale information about each pixel, so as to obtain the grayscale information within the grayscale range and the position information about corresponding pixels as the feature information.

Certainly, the feature information may also be extracted from the second ambient image by other means, which are not specially limited herein.

The recognition module is configured to input the feature information into a pre-trained obstacle recognition model for recognizing the obstacle type information.

The obstacle recognition model may be obtained by training samples of obstacle images in advance. The obstacle recognition model may be a neural network model, a classifier, or other models, as long as it may determine, according to the feature information, whether an obstacle exists in the second ambient image or not. A method for training the obstacle recognition model and a specific working process of determining whether the obstacle exists or not are not specially limited herein. The obstacles in the present disclosure may be a paper scrap, a book, a table leg, a door, a refrigerator, a curtain, etc., which are not enumerated one by one herein.

The recognition module may recognize the obstacle type information by inputting the feature information into a pre-trained obstacle classification model when determining the presence of the obstacle in the second ambient image.

The obstacle classification model may be obtained by training samples of obstacle classes in advance. The obstacle classification model may be a neural network model, a classifier, or other models, as long as it may determine, according to the feature information, the type of the obstacle. A method for training the obstacle recognition model and a specific working process of determining the type of the obstacle are not specially limited herein. Accordingly, the second ambient image processing module further includes a training module for generating the obstacle recognition model by using the acquired training data.

In the present disclosure, the obstacles may be classified into three types according to the sizes of the obstacles.

By way of example, the first type of obstacles are those that may be driven over and cleared, such as paper scraps; the second type of obstacles are those that cannot be driven over but need to be cleared, such as books; and the third type of obstacles are those that cannot be driven over and do not need to be cleared, such as doors, walls, or table legs.

Further, as shown in FIG. 1 and FIG. 2, the fixed seat 140 includes a body 141 and end portions 142 located on both sides of the body 141. The camera apparatus 120, the infrared emission apparatus 150, and the infrared reception apparatus 160 are assembled on the body 141, and the linear laser emitters 110 are assembled at the end portions 142.

In some possible embodiments of the present disclosure, the linear laser emitters 110 are movably connected to the fixed seat 140, and/or the fixed seat 140 has a movable structure, such that the azimuth angles and the rotation angles of the linear laser emitters 110 can be adjusted by adjusting positions of the linear laser emitters 110 relative to the fixed seat 140 and/or by adjusting relative positions of components in the fixed seat 140 itself. Accordingly, when the linear laser emitters 110 are assembled onto the fixed seat 140, it is convenient to adjust the irradiation angles and the irradiation ranges of the linear lasers emitted by the linear laser emitters 110. This allows self-calibration of the linear laser emitters 110 and their coordinated calibration with the camera apparatus 120 in a quick and convenient way. The operation is simple and convenient, thereby advantageously improving the assembly efficiency.

Further, the rotation angles of the linear laser emitters 110 are adjusted, such that the linear lasers may be allowed to be perpendicular to the horizontal plane. That is, the self-calibration of the linear laser emitters 110 is achieved. The azimuth angles of the linear laser emitters 110 are adjusted, such that the angle between the linear lasers and the optical axis of the camera apparatus 120 is adjusted, and thus, the linear lasers are allowed to be located within the field-of-view angle of the camera apparatus 120. That is, the coordinated calibration between the linear laser emitters 110 and the camera apparatus 120 is achieved. This helps to ensure that the camera apparatus 120 can accurately and comprehensively capture the light rays emitted by the linear laser emitters 110 and then reflected by the obstacle, thereby improving the accuracy and comprehensiveness for the camera apparatus 120 to acquire the ambient images. It can be understood that after the azimuth angles of the linear laser emission apparatuses 110 on both sides of the camera apparatus 120 are adjusted respectively, the linear lasers on both sides are fixed by dispensing an adhesive. The linear lasers are allowed to be perpendicular to the horizontal plane by reasonably adjusting the rotation angles of the linear laser emitters 110, thereby advantageously improving a ranging range. In particular, in an aspect, the linear laser emitters 110 are movably connected to the fixed seat 140, such that the azimuth angles and the rotation angles of the linear laser emitters 110 can be adjusted by adjusting the positions of the linear laser emitters 110 relative to the fixed seat 140. In another aspect, the fixed seat 140 has a movable structure, such that the azimuth angles and the rotation angles of the linear laser emitters 110 can be adjusted by adjusting the relative positions of the components in the fixed seat 140 itself. In yet another aspect, the linear laser emitters 110 are movably connected to the fixed seat 140, and the fixed seat 140 has a movable structure, such that the azimuth angles and the rotation angles of the linear laser emitters 110 can be adjusted by adjusting the positions of the linear laser emitters 110 relative to the fixed seat 140 and by adjusting the relative positions of the components in the fixed seat 140 itself. According to embodiments in the present disclosure, the azimuth angles and the rotation angles of the linear laser emitters 110 are adjusted in different ways, such that the requirements for different structures of the fixed seat 140 and for different connections between the linear laser emitters 110 and the fixed seat 140 can be met.

In some possible embodiments of the present disclosure, as shown in FIG. 1, the linear laser emitters 110 are movably connected to the fixed seat 140, and the fixed seat 140 has a movable structure. In particular, the fixed seat 140 includes the body 141, the end portion 142, and a connection member 143. The camera apparatus 120 is disposed on the body 141, and the linear laser emitters 110 are connected to the end portion 142 via the connection member 143. The connection member 143 is provided with a through hole, through which the linear laser emitters 110 are disposed in the connection member 143 in a penetrating way, and the linear laser emitters 110 are rotatably connected to the connection member 143. That is, the linear laser emitters 110 are rotatable within the through hole of the connection member 143, such that the rotation angles of the linear laser emitters 110 can be adjusted to allow the linear laser to be perpendicular to the horizontal plane, thereby expanding the ranging range. The connection member 143 is movably connected to the end portion 142. For example, the connection member 143 is horizontally rotatable relative to the end portion 142. In particular, the connection member 143 rotates relative to the end portion 142 in a plane parallel to the horizontal plane. That is, the rotation axis of the connection member 143 relative to the end portion 142 is a straight line in a vertical direction, such that the connection member 143 drives the linear laser emitters 110 to rotate relative to the end portion 142, and the azimuth angles of the linear laser emitters 110 can be adjusted, thereby allowing the linear lasers emitted by the linear laser emitters 110 to be located within the field-of-view angle of the camera apparatus 120.

It can be understood that the linear laser emitters 110 are rotatable relative to the connection member 143, and the connection member 143 is movable relative to the end portion 142, such that the rotation angles of the linear laser emitters 110 may be calibrated in a process of calibration by rotating the linear laser emitters 110 to an appropriate position within the through hole of the connection member 143. That is, the self-calibration of the linear laser emitters 110 is achieved. The azimuth angles of the linear laser emitters 110 may be calibrated by moving the connection member 143 to an appropriate position relative to the end portion 142. That is, the coordinated calibration between the linear laser emitters 110 and the camera apparatus 120 is achieved. The operation is simple, and the calibration is convenient. It can be understood that after the calibration of the rotation angles and the azimuth angles of the linear laser emitters 110 is completed, the connection member 143, the end portion 142, and the linear laser emitters 110 may be fixedly connected by fixing means. For example, the end portion 142, the body 141, and the linear laser emitters 110 may be fixed by using a binder, glue, etc. The operation is simple.

In an embodiment, further, the body 141 is provided with a positioning slot 144, and the connection member 143 is provided with a convex structure 145 adapted to the positioning slot 144. The convex structure 145 rotates horizontally within the positioning slot 144. In particular, the convex structure 145 is convex in the vertical direction, such that the connection member 143 rotates in a plane parallel to the horizontal plane relative to the end portion 142. That is, the rotation axis of the connection member 143 relative to the body 141 is a straight line in the vertical direction. Therefore, with the horizontal rotation of the convex structure 145 of the connection member 143 within the positioning slot 144 of the end portion 142, the linear laser emitters 110 can be driven to horizontally rotate relative to the end portion 142 by taking the convex structure 145 as the rotation axis. This enables the linear lasers emitted by the linear laser emitters 110 to be located within the field-of-view angle of the camera apparatus 120, thereby allowing the coordinated calibration between linear laser emitters 110 and the camera apparatus 120. The structure is simple, and the operation is convenient. It can be understood that the positioning slot 144 may be a circular positioning slot, the convex structure 145 may be a cylindrical convex structure, and the circular positioning slot and the cylindrical convex structure are coordinated to advantageously improve the flexibility and the reliability in rotation of the connection member 143 relative to the body 141. It can be understood that the positioning slot 144 may also have a slot structure in other shapes that meet requirements.

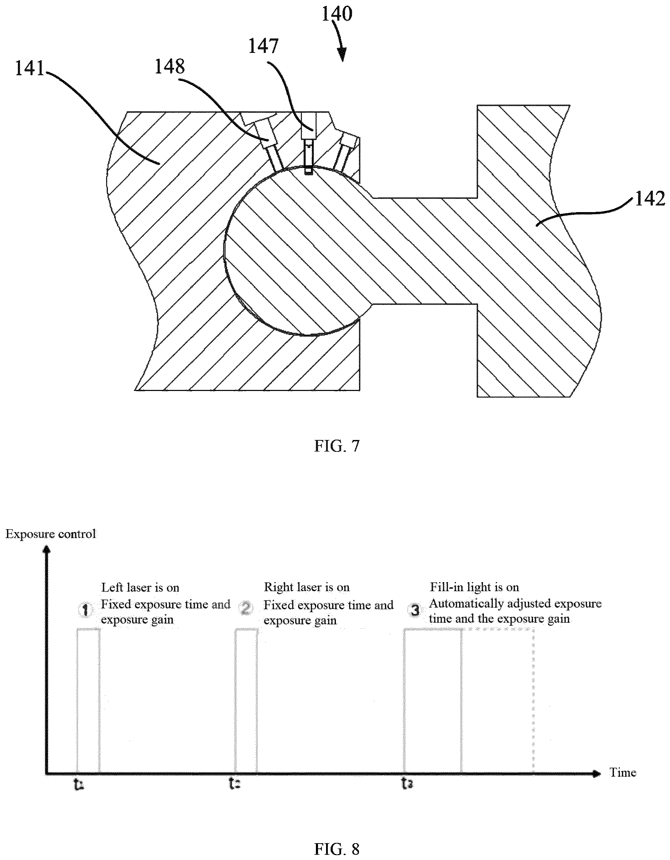

In some possible embodiments of the present disclosure, the fixed seat 140 has a movable structure. As shown in FIG. 7, the fixed seat 140 includes the body 141, the end portions 142, and connection portions 146. The end portions 142 are located on both sides of the body 141, the camera apparatus 120 is disposed on the body 141, and the linear laser emitters 110 are disposed at the end portions 142. For example, the linear laser emitters 110 are fixedly or detachably installed at the end portions 142. The connection portions 146 are pivotally connected to the body 141, and the end portions 142 are connected to the connection portions 146, such that the azimuth angles of the linear laser emitters 110 can be adjusted by swinging the connection portions 146 relative to the body 141, thereby allowing the linear lasers emitted by the linear laser emitters 110 to be located within the field-of-view angle of the camera apparatus 120. The end portions 142 are rotatably connected to the connection portions 146, such that when the end portions 142 rotate relative to the connection portions 146, the rotation angles of the linear laser emitters 110 can be adjusted, thereby allowing the linear lasers to be perpendicular to the horizontal plane, and expanding the ranging range.

In particular, the connection portions 146 are articulated with the body 141, a side, which faces the end portions 142, of the connection portions 146 is provided with a cylindrical groove, and the end portions 142 are provided with a cylindrical protrusion adapted to the cylindrical groove. After the linear laser emitters 110 are assembled onto the end portions 142, the cylindrical protrusions of the end portions 142 are placed into the cylindrical grooves, and are rotated relative to the cylindrical grooves to adjust the rotation angles of the linear laser emitters 110. After the linear lasers becomes perpendicular to the horizontal plane, the end portions 142 and the connection portions 146 are fixed by using, for example, glue or other position-limiting structures, such that the self-calibration of the linear laser emitters 110 may be achieved. Then, swinging positions of the connection portions 146 relative to the body 141 are adjusted, such that the azimuth angles of the linear laser emitters 110 may be adjusted. After the linear lasers emitted by the linear laser emitters 110 are located at appropriate positions within the field-of-view angle of the camera apparatus 120, the body 141 and the connection portions 146 are fixed by using, for example, glue or other position-limiting structures, thereby enabling the coordinated calibration between the linear laser emitters 110 and the camera apparatus 120. It can be understood that since the fixed seat 140 has a movable structure, that is, the end portions 142 are movably connected to the body 141 by means of the connection portions 146, the rotation angles and the azimuth angles of the linear laser emitters 110 installed at the end portions 142 can be calibrated during a process of calibration by reasonably adjusting the relative positions of the end portions 142, the connection portions 146, and the body 141. The operation is simple, and the calibration is convenient. It can be understood that after the calibration of the rotation angles and the azimuth angles of the linear laser emitters 110 is completed, the end portions 142, the connection portions 146, and the body 141 may be fixedly connected by fixing means. For example, the end portions 142, the connection portions 146, and the body 141 may be fixed by using a binder, glue, position-limiting portions 147, etc. The operation is simple.

In some possible embodiments of the present disclosure, the fixed seat 140 has a movable structure. The fixed seat 140 includes the body 141, the end portions 142, and the position-limiting portions 147. The end portions 142 are located on both sides of the body 141, the camera apparatus 120 is disposed on the body 141, and the linear laser emitters 110 are disposed at the end portions 142. As shown in FIG. 8, the end portions 142 are rotatably connected to the body 141. In particular, the end portions 142 are in a ball connection with the body 141, such that the end portions 142 can swing relative to the body 141 and can rotate relative to the body 141. The linear laser emitters 110 are assembled onto the end portions 142, and in turn swing and rotate relative to the body 141 by means of the end portions 142, such that the azimuth angles and the rotation angles of the linear laser emitters 110 can be adjusted. The operation is simple, and the calibration is convenient.

In particular, the end portions 142 are in a ball connection with the body 141, the body 141 is provided with position-limiting holes 148, and the position-limiting portions 147 are set bolts. The rotation angles of the linear laser emitters 110 are adjusted by rotating the end portions 142 relative to the body 141. When the linear lasers are perpendicular to the horizontal plane, the self-calibration of the linear laser emitters 110 may be achieved. The azimuth angles of the linear laser emitters 110 may be adjusted by adjusting swinging positions of the end portions 142 relative to the body 141. When the linear lasers emitted by the linear laser emitters 110 are located at appropriate positions within the field-of-view angle of the camera apparatus 120, the coordinated calibration between the linear laser emitters 110 and the camera apparatus 120 may be achieved. Then, the positions of the end portions 142 relative to the body 141 are limited and fixed by penetrating the set bolts through the position-limiting holes 148, thereby fixing the end portions 142 and the body 141. The operation is simple. It can be understood that the number of the position-limiting holes 148 in the body 141 may be one, two, or more. A different number of the position-limiting holes 148 is provided according to different positions of the position-limiting holes 148, so as to meet the requirement that the end portions 142 and the body 141 can be always fixed by passing the set bolts through the position-limiting holes 148 in cases of rotating the end portions 142 to different positions relative to the body 141. The set bolts may also be elastic members. That is, an end, which is butted against the end portion 142, of the set bolt is an elastic member, and the end portions 142 and the body 141 are reliably connected by elasticity. It can be understood that a spherical surface of the end portions 142 may also be provided with positioning holes adapted to the set bolts, such that the set bolts are fitted with the positioning holes after passing through the position-limiting holes 148 and then compressed tightly, thereby advantageously improving the reliability of the fixed connection between the end portions 142 and the body 141.

In some possible embodiments of the present disclosure, the linear laser emitters 110 are movably connected to the fixed seat 140, and the fixed seat 140 has a movable structure. As shown in FIG. 2, the fixed seat 140 includes the body 141 and the end portions 142 located on both sides of the body 141. The camera apparatus 120 is disposed on the body 141, and the linear laser emitters 110 are disposed at the end portions 142. In particular, the end portions 142 are pivotally connected to the body 141. For example, the end portions 142 are articulated with the body 141, such that the end portions 142 can swing relative to the body 141. The linear laser emitters 110 are rotatably connected to the end portions 142. For example, the linear laser emitters 110 are cylindrical, and the linear laser emitters 110 may rotate relative to installation slots in the end portions 142, such that the rotation angles of the linear laser emitters 110 can be adjusted to allow the linear lasers to be perpendicular to the horizontal plane, thereby expanding the ranging range. Since the linear laser emitters 110 are installed onto the end portions 142, and the end portions 142 can swing relative to the body 141, the azimuth angles of the linear laser emitters 110 can be adjusted to allow the linear lasers emitted by the linear laser emitters 110 to be located within the field-of-view angle of the camera apparatus 120.

It can be understood that since the linear laser emitters 110 are rotatable relative to the end portions 142, and the end portions 142 are pivotally connected to the body 141, the calibration of the rotation angles of the linear laser emitters 110 may be achieved during a process of calibration by rotating the linear laser emitters 110 to appropriate positions. That is, the self-calibration of the linear laser emitters 110 is achieved. The calibration of the azimuth angles of the linear laser emitters 110 may be achieved by swinging the end portions 142 to appropriate positions relative to the body 141. That is, the coordinated calibration between the linear laser emitters 110 and the camera apparatus 120 is achieved. The operation is simple, and the calibration is convenient. It can be understood that after the calibration of the rotation angles and the azimuth angles of the linear laser emitters 110 is completed, the end portions 142, the body 141, and the linear laser emitters 110 may be fixedly connected by fixing means. For example, the end portions 142, the body 141, and the linear laser emitters 110 may be fixed by using a binder, glue, etc. The operation is simple.

In some possible embodiments of the present disclosure, the linear laser emitters 110 are movably connected to the fixed seat 140. In particular, the fixed seat 140 is provided with an installation cavity for installing the linear laser emitters 110, and the linear laser emitters 110 are movably disposed in the installation cavity. The installation cavity includes a first end and a second end, and a cross-sectional area of the first end is less than that of the second end. That is to say, the installation cavity has a flared structure. The cross-sectional area of the first end is greater than those of the linear laser emitters 110, indicating that the linear laser emitters 110 can move within the installation cavity. Front ends of the linear laser emitters 110 are close to the first end of the installation cavity. The linear laser emitters 110 rotate relative to the installation cavity, such that the rotation angles of the linear laser emitters 110 can be adjusted to allow the linear lasers to be perpendicular to the horizontal plane, thereby expanding the ranging range. Rear ends of the linear laser emitters 110 swing relative to the front ends, such that the azimuth angles of the linear laser emitters 110 can be adjusted, thereby allowing the linear lasers emitted by the linear laser emitters 110 to be located within the field-of-view angle of the camera apparatus 120.

It can be understood that since the linear laser emitters 110 are movably disposed in the installation cavity of the fixed seat 140, and the linear laser emitters 110 may rotate and swing relative to the body 141, the calibration of the rotation angles and the azimuth angles of the linear laser emitters 110 may be achieved during a process of calibration by reasonably adjusting installation angles and installation positions of the linear laser emitters 110 with respect to the fixed seat 140. The operation is simple, and the calibration is convenient. It can be understood that after the calibration of the rotation angles and the azimuth angles of the linear laser emitters 110 is completed, the linear laser emitters 110 and the fixed seat 140 may be fixedly connected by fixing means. For example, the linear laser emitters 110 may be fixed onto the fixed seat 140 by using a binder, glue, etc., such that the assembly of the linear laser emitters 110 and the fixed seat 140 may be completed. The operation is simple.

In some possible embodiments of the present disclosure, as shown in FIG. 1, the linear laser emitters 110 are cylindrical, the linear laser emitters 110 are provided with a first step structure 111 on an outer peripheral side, the fixed seat 140 is provided with an installation slot for installing the linear laser emitters 110, and an inner wall of the installation slot is provided with a second step structure 149. The first step structure 144 and the second step structure 149 are adapted with each other such that the movements of the linear laser emitters 110 in an axial direction can be limited, thereby advantageously improving the assembly efficiency.

In some possible embodiments of the present disclosure, the self-moving device further includes a device control module, for controlling movement of the self-moving device according to obstacle position information and obstacle type information. The device control module may be directly connected to a master control unit, and may directly acquire the obstacle position information and the obstacle type information obtained after the master control unit processes a first ambient image and a second ambient image. Alternatively, the device control module may also be connected to the master control unit by means of a memory, in which the obstacle position information and the obstacle type information obtained by the master control unit may be stored, and the device control module may directly call the obstacle position information and the obstacle type information stored in the memory.

Furthermore, the device control module and the master control unit may be two separately independent circuits or integrated into the same circuit. For example, the device control module and the master control unit may be two independent chips or integrated into the same chip. The type of the chip is not specially limited herein, as long as its functions can be fulfilled.

The device body 200 may also be provided with a moving mechanism such as a roller or a crawler, and the device control module may control the moving mechanism to implement the movement of the self-moving device.

In some embodiments of the present disclosure, if an obstacle exists in only one of the first ambient image and the second ambient image, the recognition result is that no obstacle exists. For example, no obstacle position information is received, or it is determined from the obstacle type information that no obstacle exists.

If an obstacle exists in both the first ambient image and the second ambient image, the recognition result is that the obstacle exists. In this case, the type of the obstacle may be determined according to the second ambient image. For example, the obstacle position information is received, and it is determined from the obstacle type information that the obstacle exists.

With respect to the first type of obstacles, the device control module may control the self-moving device to continue moving according to a current moving path and clear the obstacle.

With respect to the second type and the third type of obstacles, the position information about the obstacle may be obtained according to the obstacle position information; steering distance information, steering direction information, and steering angle information about the self-moving device may be determined by the device control module, so as to re-plan the moving path, i.e., to plan an obstacle avoidance path; and the self-moving device is then controlled to perform an automatic obstacle avoidance action according to the obstacle avoidance path, thereby avoiding the obstacles that cannot be cleared.

Further, in some embodiments of the present disclosure, the self-moving device may include an alert apparatus. The alert apparatus may be connected to the device control module. The device control module may control the alert apparatus to issue an alarm in the form of at least one of sound and light. With respect to the second type of obstacles, not only may the obstacle be avoided by re-planning the moving path as described above, but also a prompt sound may be issued by the alert apparatus, thereby reminding a user to timely take away the obstacles that cannot be cleared by the self-moving device, while avoiding the obstacles.

In some possible embodiments of the present disclosure, as shown in FIG. 3, the self-moving device further includes a buffer component 170. The buffer component 170 is disposed on the front side of the device body 200, and the linear laser module is located between the buffer component 170 and the device body 200. The arrangement of the buffer component 170 protects the device body 200 and the linear laser module to a certain extent, avoids damages to the device body 200 caused by collision between the self-moving and cleaning device and the obstacles during the forward movement, and avoids damages to the linear laser module caused by collision with the obstacles due to its direct exposure to an external environment, thereby advantageously improving the reliability of the device body 200 and the linear laser module.

In particular, the camera apparatus 120, the linear laser emitters 110, and the return-to-pile positioning apparatus 190 are located between the buffer component 170 and the device body 200, such that the buffer component 170 protects the camera apparatus 120, the linear laser emitters 110, and the return-to-pile positioning apparatus 190 to a certain degree, thereby protecting the camera apparatus 120, the linear laser emitters 110, and the return-to-pile positioning apparatus 190 against damages by external forces. This advantageously prolongs service lives of the camera apparatus 120, the linear laser emitters 110, and the return-to-pile positioning apparatus 190. The buffer component 170 is provided with a window 171 at a position facing the camera apparatus 120, such that external ambient light can enter the camera apparatus 120. The buffer component 170 is provided with windows at positions facing the linear laser emitters 110, such that the lasers emitted by the linear laser emitters 110 can be emitted outward from the buffer component 170. The buffer component 170 is provided with a window at a position facing the return-to-pile positioning apparatus 190, such that the return-to-pile positioning apparatus 190 is enabled to receive and emit infrared signals, thereby ensuring the operational reliability of the linear laser module.

It can be understood that the windows corresponding to the camera apparatus 120, the linear laser emitters 110, the infrared reception apparatus 160, and the infrared emission apparatus 150 may be partly communicated, all communicated, or spaced apart from each other, such that the requirements for different positions where the above components are disposed can be met, which are not specifically limited in the present disclosure. For example, the window corresponding to the camera apparatus 120 on the buffer component 170, for example, the window 171 shown in FIG 3, may be disposed at a middle position on the front side of the device body 200. Windows are respectively disposed on the buffer component 170 at positions corresponding to the linear laser emitters 110 on both sides of the camera apparatus 120. The windows corresponding to the infrared reception apparatus 160 and the infrared emission apparatus 150 are located at an upper portion of a protective plate. Also, the windows for the infrared reception apparatus and the infrared emission apparatus are spaced apart from each other, and further spaced apart from the camera apparatus and the window corresponding to the camera apparatus as well as the windows corresponding to the linear laser emitters.

It can be understood that the buffer component 170 may be equivalent to a bumper plate of the device body 200. When the linear laser module is installed, the fixed seat 140, on which the camera apparatus 120, the camera apparatus 120, the linear laser emitters 110, and the return-to-pile positioning apparatus 190 are assembled, is first installed on the device body 200, and then, the buffer component 170 (for example, the bumper plate) is connected to the fixed seat 140 or the device body 200.

In some possible embodiments of the present disclosure, the buffer component 170 includes a bumper plate 172 and an elastic member. The bumper plate 172 and the device body 200 are connected by means of the elastic member, and the linear laser module is located on an inner side of the bumper plate 172. The elastic member is disposed such that when the buffer component 170 collides with an obstacle, the force acting on the device body 200 and the linear laser module by the bumper plate 172 can be reduced to provide a certain buffering effect, thereby further reducing damages of the obstacle to the device body and the linear laser module. The bumper plate 172 is provided with a rubber cushion layer outside, such that when the buffer component 170 collides with an obstacle, the rubber cushion layer is in direct contact with the obstacle. That is, the rubber cushion layer provides good protection to the bumper plate 172. Moreover, the rubber cushion layer is an elastic member, which can further provide a buffering effect. That is to say, in the present disclosure, the buffer component 170 is enabled to have a double-layer buffering effect by means of the elastic member and the rubber cushion layer, thereby greatly reducing the possibility that the device body 200 and the linear laser module are damaged by the obstacle, and improving the reliability of the self-moving device. In particular, the elastic member is an elastic column and/or a spring, or other elastic members that meet requirements.

In some possible embodiments of the present disclosure, as shown in FIG. 3, the self-moving device further includes an infrared fill-in light 180 and an ambient light sensor. The ambient light sensor is configured to detect the brightness of ambient light. The infrared fill-in light 180 is disposed on the buffer component 170, and is close to the window 171 corresponding to the camera apparatus 120, such that in a case where the ambient light is too weak to meet the requirement for the camera apparatus 120 to capture the ambient images clearly and accurately, that is, in a case where the current ambient light does not meet the requirement for the camera apparatus 120 to perform an exposure operation, the infrared fill-in light 180 is used to fill the light, so as to meet a shooting requirement of the camera apparatus 120 and ensure that the camera apparatus 120 can capture the ambient image clearly and accurately, thereby improving the accuracy of obstacle recognition.

Further, the controller of the self-moving device is connected to the infrared fill-in light 180 and the ambient light sensor, and controls an operation status of the infrared fill-in light 180 according to detected signal of the ambient light sensor, so as to fill the light for the exposure operation of the camera apparatus 120. For example, when the ambient light sensor detects that the ambient light is dark and insufficient so that the requirement for the exposure operation of the camera apparatus 120 cannot be met, or the type of the obstacles cannot be confirmed accurately and clearly based on the second ambient image captured by the camera apparatus 120 under the ambient light, the ambient light sensor sends a signal to the controller, and the controller controls, according to the received signal, the infrared fill-in light 180 to work for increasing the illumination. In this way, the ambient light after light filling meets the shooting requirement of the camera apparatus 120, and the type of the obstacles is confirmed accurately and quickly according to the clearer second ambient image captured by the camera apparatus 120. It can be understood that when the ambient light sensor detects that the ambient light is bright enough to meet the requirement for the exposure operation of the camera apparatus 120, the ambient light sensor sends a signal to the controller, and the controller controls, according to the received signal, the infrared fill-in light 180 to stop working, which is conducive to energy saving. In an optional embodiment, the controller of the self-moving device may determine the intensity of the ambient light based on the brightness of the image acquired by the camera, thereby controlling the fill-in light to turn on or turn off.

Further, in an aspect, the ambient light sensor is disposed on the fixed seat 140. In another aspect, the ambient light sensor is disposed on the buffer component 170. In yet another aspect, the ambient light sensors are disposed on the fixed seat 140 and the buffer component 170. Different positions, where the ambient light sensor is disposed, can meet requirements for different structures of the ambient light sensor, different structures of the buffer component 170, and different structures of the fixed seat 140. It can be understood that the ambient light sensor is disposed on at least one of the fixed seat 140 and the buffer component 170, allowing the modular design of the sensing system of the self-moving device, which is convenient for assembly and repair. It can be understood that the ambient light sensor may also be disposed on the device body 200.

It can be understood that there may be one, two, three, or other quantity of infrared fill-in lights 180 that meet requirements, which is not specifically limited in the present disclosure. In particular, the infrared fill-in light 180 is disposed below and/or laterally and/or above the window 171 corresponding to the camera apparatus 120, and further located on the buffer component. The specific position, where the infrared fill-in light 180 is disposed, is not specifically limited in the present disclosure. In particular, the infrared fill-in light 180 is an LED infrared fill-in light 180 or other infrared fill-in lights 180 that meet requirements.

According to embodiments of a third aspect of the present disclosure, a self-moving device is provided. The self-moving device includes: a device body; a controller; and a linear laser module including a camera apparatus and a linear laser emitter. The linear laser module is disposed on the device body. The controller is electrically connected to the camera apparatus and the linear laser emitter, and controls the self-moving device according to an ambient image captured by the camera apparatus.

Optionally, the-moving device further includes: an infrared fill-in light disposed on a buffer component. The controller is connected to the fill-in light for controlling the infrared fill-in light to turn on or turn off.

Optionally, the camera apparatus captures a first ambient image when the linear laser emitter is turned on, and captures a second ambient image when the fill-in light is turned on. The distance between a target object and the camera apparatus is obtained according to the first ambient image. The target object is recognized according to the second ambient image.

Optionally, when the linear laser emitter and the fill-in light are turned off, the camera apparatus captures a third ambient image. Subtraction is performed between pixels in the first ambient image and pixels at corresponding positions in the third ambient image to obtain a corrected laser image. The distance between the target object and the camera apparatus is obtained according to the corrected laser image.

Optionally, the first ambient image is acquired by the camera apparatus with preset first exposure parameters; and the second ambient image is acquired by the camera apparatus with second exposure parameters. The second exposure parameters are obtained according to imaging quality of the previous acquired frame of the second ambient image and in combination with the current exposure parameters. The exposure parameters include an exposure time and/or an exposure gain.

Optionally, an optical filter is disposed in front of the camera apparatus and configured such that only infrared light can enter the camera apparatus.

FIG. 8 is a diagram of time points for time-division control according to an embodiment of the present disclosure. At the moment ti, the camera apparatus uses fixed exposure, and the activation time of the left linear laser emitter is consistent with the exposure time of the camera apparatus. At the moment t₂, the camera apparatus uses fixed exposure, and the activation time of the right linear laser emitter is consistent with the exposure time of the camera apparatus. At the moment t₃, a light fill-in apparatus is turned on, the camera apparatus uses automatic exposure, and a previous frame for object recognition is referenced for exposure parameters. The exposure parameters include an exposure time and/or an exposure gain. That is, the first ambient image is acquired by the camera apparatus with preset first exposure parameters, and the second ambient image is acquired by the camera apparatus with second exposure parameters. The second exposure parameters may be obtained according to imaging quality of the previous acquired frame of the second ambient image and in combination with the current exposure parameters.

In some embodiments, the camera apparatus may acquire a third ambient image. When the third ambient image is acquired, a laser of a first predetermined wavelength and light of a second predetermined wavelength are stopped from emitting, and the target object is not irradiated by the laser or the filled light. The third ambient image is used to perform calculations with the first ambient image and the second ambient image, so as to remove the background noise and further reduce the impact from lamp light, strong light, etc. Thus, it is ensured that one image is sufficiently shot when all the laser emission apparatuses and the light fill-in apparatuses are turned off. The purpose of shooting is to perform subtraction between pixels in the first ambient image and pixels at corresponding positions in the third ambient image, so as to obtain a corrected laser image, thereby reducing the impact on the linear lasers by an external light source as much as possible. For example, when the target object is exposed to natural light, a natural light image is obtained, a laser ranging result of the target object under the sun is optimized, and then, the distance between the target object and the camera apparatus may be obtained according to the corrected laser image.

The present disclosure has been described by means of the above embodiments. But, it should be understood that the above embodiments are merely for exemplary and illustrative purposes, and are not intended to limit the present disclosure to the scope of the embodiments described. Furthermore, those skilled in the art may understand that the present disclosure is not limited to the above embodiments, and more variations and modifications may be made according to the teachings of the present disclosure. These variations and modifications shall fall within the scope of protection claimed by the present disclosure. The scope of protection of the present disclosure is defined by the appended claims and equivalent scopes thereof.

## Claims

1. A linear laser module for a self-moving device, comprising:
a camera apparatus for acquiring an ambient image;
at least one linear laser emitter, disposed on at least one side of the camera apparatus, and configured to emit a laser having a linear projection, the camera apparatus working in coordination with the at least one linear laser emitter; and
a return-to-pile positioning apparatus for receiving a first infrared signal emitted by a charging pile.

2. The linear laser module according to claim 1, further comprising:
an optical filter, disposed in front of the camera apparatus, and configured to only allow infrared light to enter the camera apparatus, wherein
the return-to-pile positioning apparatus further comprises an infrared emission apparatus for emitting a second infrared signal.

3. The linear laser module according to claim 1, further comprising:
a fixed seat, on which the camera apparatus, the at least one linear laser emitter, and the return-to-pile positioning apparatus are disposed.

4. The linear laser module according to claim 3, wherein
the at least one linear laser emitter is movably connected to the fixed seat, and/or the fixed seat has a movable structure, such that an azimuth angle and a rotation angle of the at least one linear laser emitter are adjustable.

5. The linear laser module according to claim 4, wherein
the fixed seat comprises a body and a connection member,
the camera apparatus is disposed on the body,
the at least one linear laser emitter is disposed in the connection member in a penetrating way,
the at least one linear laser emitter is rotatably connected to the connection member such that the rotation angle of the at least one linear laser emitter is adjustable, and
the connection member is movably connected to the body such that the azimuth angle of the at least one linear laser emitter is adjustable.

6. The linear laser module according to claim 5, wherein
the body is provided with a positioning slot, wherein the connection member is provided with a convex structure adapted to the positioning slot, and the convex structure is configured to rotate horizontally within the positioning slot for driving the at least one linear laser emitter to rotate relative to the body.

7. The linear laser module according to claim 4, wherein
the fixed seat comprises a body, at least one end portion, and at least one connection portion, wherein the at least one end portion is located on at least one side of the body and connected to the body by the at least one connection portion, the camera apparatus is disposed on the body, and the at least one linear laser emitter is disposed at the at least one end portion;
the at least one connection portion is pivotally connected to the body such that the azimuth angle of the at least one linear laser emitter is adjustable;
and the at least one end portion is rotatably connected to the at least one connection portion such that the rotation angle of the at least one linear laser emitter is adjustable.

8. The linear laser module according to claim 4, wherein
the fixed seat comprises a body, end portions, and position-limiting portions, wherein the end portions are located on both sides of the body, the camera apparatus is disposed on the body, and the at least one linear laser emitter is disposed at the end portions;
the end portions are rotatably connected to the body such that the rotation angle and the azimuth angle of the at least one linear laser emitter are adjustable; and
the position-limiting portions are disposed between the end portions and the body, and are configured to limit rotations of the end portions relative to the body.

9. The linear laser module according to claim 4, wherein
the fixed seat comprises a body and end portions located on both sides of the body, wherein the camera apparatus is disposed on the body, and the at least one linear laser emitter is movably disposed at the end portions;
the end portions are pivotally connected to the body such that the azimuth angle of the at least one linear laser emitter is adjustable; and
the at least one linear laser emitter is rotatably connected to the end portions such that the rotation angle of the at least one linear laser emitter is adjustable.

10. The linear laser module according to claim 4, wherein
the fixed seat is provided with an installation cavity, wherein the at least one linear laser emitter is movably disposed in the installation cavity, the installation cavity comprises a first end and a second end, a cross-sectional area of the first end is less than a cross-sectional area of the second end, and the cross-sectional area of the first end is greater than a cross-sectional area of the at least one linear laser emitter; and
a front end of the at least one linear laser emitter is close to the first end, the at least one linear laser emitter is configured to rotate relative to the installation cavity such that the rotation angle of the at least one linear laser emitter is adjustable, and a rear end of the at least one linear laser emitter is configured to swing relative to the front end such that the azimuth angle of the at least one linear laser emitter is adjustable.

11. The linear laser module according to any one of claims 3 to 10, wherein
the at least one linear laser emitter is cylindrical and provided with a first step structure on an outer peripheral side thereof;
the fixed seat is provided with an installation slot for installing the at least one linear laser emitter, wherein an inner wall of the installation slot is provided with a second step structure; and
the first step structure and the second step structure are adapted to each other, and are configured for limiting a movement of the at least one linear laser emitter in an axial direction.

12. A self-moving device, comprising:
a device body;
a controller; and
the linear laser module according to any one of claims 1 to 11, wherein
the linear laser module is disposed on the device body, and
the controller is electrically connected to the camera apparatus and the at least one linear laser emitter, and is configured to control functions of the self-moving device according to the ambient image captured by the camera apparatus.

13. The self-moving device according to claim 12, further comprising:
a charging pile, adapted to be connected to or disconnected from the device body, the charging pile comprising an infrared emission apparatus for emitting the first infrared signal, wherein
the controller is connected to the return-to-pile positioning apparatus of the linear laser module, and is configured to:
guide, according to the first infrared signal received by the return-to-pile positioning apparatus, the device body to be docked with the charging pile; and
emit a second infrared signal to the charging pile when the device body is successfully docked with the charging pile.

14. The self-moving device according to claim 13, further comprising:
a buffer component, disposed on a front side of the device body, wherein
the linear laser module is located between the buffer component and the device body, and
the buffer component is provided with windows at positions facing the camera apparatus, the at least one linear laser emitter, and the return-to-pile positioning apparatus of the linear laser module.

15. The self-moving device according to claim 14, further comprising:
an infrared fill-in light disposed on the buffer component, wherein
the controller is connected to the fill-in light for controlling the fill-in light to turn on or turn off.

16. The self-moving device according to claim 12, further comprising:
a device control module, electrically connected to the camera apparatus, and configured for controlling a movement of the self-moving device according to obstacle position information and obstacle type information in the ambient image captured by the camera apparatus.

17. The self-moving device according to claim 16, further comprising:
a master control unit, electrically connected to the camera apparatus and the device control module, and configured for processing the ambient image captured by the camera apparatus to obtain the obstacle position information and the obstacle type information, wherein
the device control module is configured to receive the obstacle position information and the obstacle type information from the master control unit.

18. The self-moving device according to claim 16, further comprising:
a memory, electrically connected to the master control unit and the device control module, and configured for receiving and storing the obstacle position information and the obstacle type information from the master control unit, wherein
the device control module is configured to receive the obstacle position information and the obstacle type information from the memory.

19. The self-moving device according to any one of claims 16 to 18, wherein
the device control module and the master control unit are independent of each other or integrated together.

20. The self-moving device according to any one of claims 16 to 18, further comprising:
an alert apparatus, connected to the device control module, and configured for issuing an alarm in the form of at least one of sound and light under a control of the device control module.
